Europäisches Patentamt

(19) European Patent Office

Office européen des brevets

(11) Numéro de publication: **0 056 910**
**A1**

(12) **DEMANDE DE BREVET EUROPEEN**

(21) Numéro de dépôt: **81400082.4**

(22) Date de dépôt: **21.01.81**

(51) Int. Cl.³: **H 02 J 9/08**
**H 02 J 9/06**

(43) Date de publication de la demande:
**04.08.82 Bulletin 82/31**

(84) Etats contractants désignés:
**BE CH DE GB IT LI NL SE**

(71) Demandeur: **Aman, Société**
**22 à 36, rue Louis Rameau**
**F-95870 Bezons(FR)**

(72) Inventeur: **Georges, Jean-Claude**
**32, rue Carnot**
**F-92100 Boulogne(FR)**

(74) Mandataire: **Behaghel, Pierre et al,**
**CABINET PLASSERAUD 84 rue d'Amsterdam**
**F-75009 Paris(FR)**

(54) Perfectionnements aux ensembles pour engendrer une énergie électrique alternative à fréquence constante et sans coupure.

(57) Il s'agit d'alimenter en énergie électrique à fréquence constante (F) et sans coupure une charge électrique (Z), à l'aide d'un groupe comprenant un alternateur (7), un moteur électrique (4) d'entraînement de cet alternateur, normalement alimenté par le réseau (5), un volant (3), un moteur thermique de secours (1), et un embrayage (2). On interpose entre les arbres A du moteur électrique et B de l'alternateur un train différentiel (11), et on entraîne en rotation la cage (14) de ce train à partir de l'arbre A, à l'aide d'un ensemble hydraulique (18, 21, 24) régulé par un doseur (25), à une vitesse telle que la vitesse de l'arbre B demeure constamment égale à une valeur de consigne.

Fig.1.

Perfectionnements aux ensembles pour engendrer une énergie électrique alternative à fréquence constante et sans coupure.

L'invention est relative aux ensembles ou "groupes" destinés à engendrer une énergie électrique alternative à fréquence constante et sans coupure, ainsi qu'il est requis pour l'alimentation de certains équipements électriques tels que calculateurs, ordinateurs, systèmes de télécommunications, systèmes de navigation, radars, plateformes d'essais, etc.

Elle vise plus particulièrement, parmi ces ensembles, ceux comportant un alternateur, des moyens d'entraînement de cet alternateur normalement alimentés par le réseau, des moyens de relais pour prendre le relais du réseau aux fins d'entraînement de l'alternateur dès coupure de ce réseau, moyens comprenant un volant d'inertie, un moteur thermique de secours et un embrayage ou coupleur, et des moyens de correction pour compenser les faibles et brèves variations de la vitesse du volant aux instants où l'entraînement commence à être pris en charge par les moyens de relais.

Elle vise plus particulièrement encore, parmi les ensembles considérés, ceux pour lesquels les moyens de correction comprennent d'une part un train différentiel et d'autre part un système de régulation propre à agir automatiquement sur la vitesse de rotation d'un élément régulateur rotatif dudit train, lors des permutations de la source d'énergie, de façon à maintenir sensiblement constante et égale à une valeur de consigne la vitesse de l'arbre de l'alternateur.

Elle a pour but, surtout, de rendre les moyens de correction compris par les ensembles du genre en question tels qu'ils répondent mieux que jusqu'à ce jour aux exigences de la pratique, notamment en ce qu'ils soient indépendants de toute source auxiliaire de courant continu, qu'ils soient plus fiables, plus économiques et consomment moins d'énergie que ceux antérieurement connus, sans pour autant être plus encombrants ni assurer une moins bonne précision de la régulation.

Elle est essentiellement caractérisée en ce que le train différentiel est interposé entre l'arbre A du volant et l'arbre B de l'alternateur, ce train comprenant un premier pignon solidaire de l'arbre A, un deuxième pignon solidaire de l'arbre B, et un équipage, comportant l'élément régulateur, propre à transmettre les rotations du premier pignon au second selon un rapport qui varie - et de préférence augmente - avec la vitesse de rotation dudit élément régulateur, et en ce que le système de régulation est entraîné par l'arbre A.

Dans des modes de réalisation préférés, on a recours en outre à l'une et/ou à l'autre des dispositions suivantes :

- le système de régulation comprend une pompe volumétrique à débit variable entraînée par l'arbre A, un moteur hydraulique à cylindrée constante propre à entraîner l'élément régulateur, un circuit fermé de liquide propre à transmettre intégralement à ce moteur le volume de liquide débité par cette pompe et inversement, et des moyens pour doser le débit de ce liquide dans ce circuit en fonction de la vitesse $N_S$ de l'arbre de l'alternateur et de la valeur de consigne $N_O$ de façon à maintenir $N_S$ égale à $N_O$.

- le système de régulation comprend une génératrice électrique entraînée par l'arbre A, un moteur électrique propre à entraîner l'élément régulateur, cette génératrice et ce moteur étant montés de façon à fonctionner en Ward Léonard, et un circuit électrique propre à agir sur la tension de la génératrice en fonction de la vitesse $N_S$ de l'arbre de l'alternateur et de la valeur de consigne $N_O$ de façon à donner à la vitesse du moteur une valeur telle que soit maintenue l'égalité entre $N_S$ et $N_O$,

- l'équipage est agencé de façon telle que, lorsque la vitesse de rotation $N_R$ de l'élément régulateur est nulle, la vitesse $N_E$ du volant ait sa valeur maximum légèrement supérieure à $N_O$, notamment d'environ 3% et que, lorsque $N_R$ atteint une valeur maximum relativement faible, de préférence de l'ordre d'une centaine de tours par minute, $N_E$ atteigne sa valeur minimum inférieure à la valeur de consigne $N_O$, notamment d'environ 10%,

- l'équipage comprend une cage montée folle sur l'arbre A et/ou l'arbre B, cage constituant l'élément régulateur ci-dessus et portant elle-même un troisième et un quatrième pignons engrenant l'un avec l'autre et, respectivement, le troisième avec le premier et le quatrième avec le second,

- dans un ensemble selon l'alinéa précédent, les troisième et quatrième pignons portés par la cage ont tous deux le même nombre de dents que le premier pignon et ce nombre de dents est inférieur à celui du second pignon,

- dans un ensemble selon l'alinéa précédent, les nombres de dents des premier et second pignons sont respectivement de 30 et de 31,

- des moyens sont prévus pour détecter les variations de la puissance électrique consommée par la charge alimentée par l'alternateur indépendamment de la vitesse $N_S$ et pour rendre les moyens de commande sensibles à ces variations de puissance,

- les moyens d'entraînement de l'alternateur sont constitués par un moteur électrique dont le rotor est solidaire du volant,

- les moyens d'entraînement de l'alternateur sont constitués par un moteur électrique dont le rotor est relié au volant par l'intermédiaire d'un coupleur à glissement,

- les moyens d'entraînement de l'alternateur sont constitués par le réseau lui-même.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant au dessin ci-annexé d'une manière bien entendu non limitative.

La figure 1, de ce dessin, est le schéma d'un groupe d'alimentation électrique équipé de moyens de secours conformes à l'invention.

La figure 2 est une vue schématique selon II-II, figure 1, d'une partie de ce groupe.

La figure 3 est le schéma d'une partie d'un autre groupe d'alimentation électrique également amélioré selon l'invention.

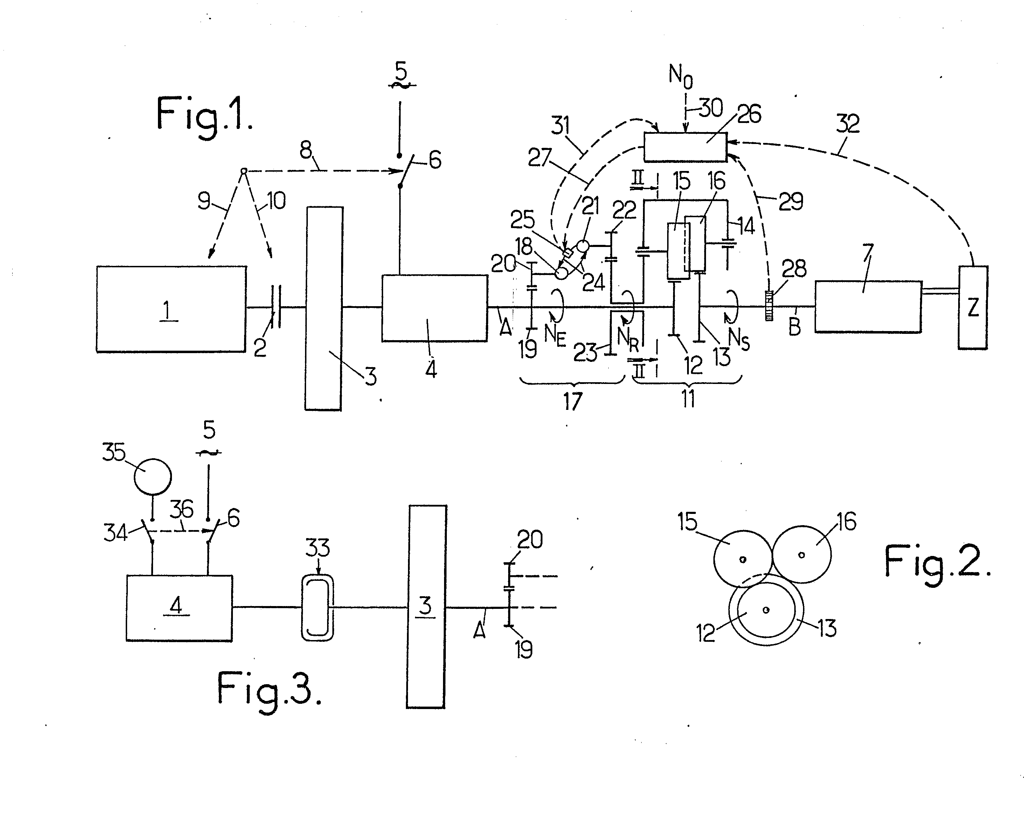

Le groupe d'alimentation électrique de la figure 1 comprend la suite des dispositifs coaxiaux suivants :

- un moteur thermique 1, généralement du type Diesel,

- un embrayage 2,

- un lourd volant d'inertie 3,

- un moteur électrique 4, généralement du type asynchrone, alimenté par le secteur ou réseau 5 à travers un disjoncteur 6,

- et un alternateur 7 entraîné par le moteur 4 et propre à alimenter en énergie électrique alternative une charge électrique Z.

Cette charge Z est d'un type nécessitant une alimentation permanente à fréquence F constante, c'est-à-dire régulée généralement à moins de 1% près et sans coupure.

5

C'est le cas par exemple des systèmes de traitement automatique de l'information, pour lesquels une coupure de courant, même brève, peut conduire à de graves désordres.

En temps normal, c'est-à-dire lorsque le réseau fournit du courant, le moteur 4 est alimenté par ce réseau, et donc entraîné à une vitesse sensiblement constante, par exemple voisine de 1.500 tours/minute, au glissement près qui est de l'ordre de 1 à 2%.

Le volant 3 est également entraîné par ce moteur 4.

L'embrayage 2 est ouvert et le moteur 1 est arrêté à l'état de veille (préchauffé).

Lorsqu'intervient une coupure du réseau, le disjoncteur 6 est déclenché, ce qui est symbolisé par la flèche 8, et le moteur 4 n'est plus alimenté.

Cette coupure se traduit immédiatement par le démarrage du moteur thermique 1 (flèche 9), puis, très peu de temps après, par exemple au bout de 1 à 2 secondes, par la fermeture de l'embrayage 2 (flèche 10).

L'énergie emmagasinée par le volant 3 est alors appliquée sur le moteur 1 et le fait monter en vitesse en quelques secondes, et au terme de cette mise en vitesse, c'est ce moteur qui assure l'entraînement de tout le groupe à la vitesse initiale.

Pendant cette manoeuvre, la vitesse de rotation du volant 3, qui est celle de l'arbre du moteur 4, diminue d'environ 10 à 15% en 3 ou 4 secondes, puis remonte à sa valeur initiale en un temps de l'ordre de 15 à 20 secondes.

A une telle diminution provisoire de vitesse correspond une réduction équivalente de la fréquence F, ce que l'on désire éviter.

Certaines solutions ont déjà été imaginées pour remédier à cet inconvénient, telles que notamment celles décrites dans le brevet FR n° 2 070 297 déposé le 20 novembre 1969 au nom de la demanderesse.

La présente invention vise une autre solution du même problème.

Ici les deux arbres A et B du moteur 4 et de l'alternateur 7 sont encore coaxiaux, mais distincts, et l'on interpose entre ces deux arbres un train différentiel 11.

Ce train comprend :

- un premier pignon 12, ou pignon d'entrée, lié à l'arbre A et entraîné à la vitesse $N_E$ de cet arbre,
- un deuxième pignon 13, ou pignon de sortie, lié à l'arbre B et entraîné à la vitesse $N_S$ de cet arbre,
- et un équipage mobile comprenant un élément rotatif régulateur, dont la vitesse de rotation $N_R$ est réglable de l'extérieur, c'est-à-dire indépendamment des vitesses $N_E$ et $N_S$, et propre à modifier le rapport entre ces deux vitesses $N_E$ et $N_S$.

On prévoit en outre des moyens extérieurs entraînés par l'arbre A, propres à donner à chaque instant à la vitesse $N_R$ une valeur telle que la vitesse $N_S$ demeure égale à une valeur de consigne $N_O$ malgré les variations de la vitesse $N_E$.

On prévoit avantageusement le train 11 ci-dessus de façon à remplir les deux conditions suivantes :

- pour une vitesse $N_E$ supérieure à la vitesse $N_O$, par exemple d'environ 3%, la valeur de la vitesse $N_R$ est nulle, de façon d'une part à tenir compte d'une légère survitesse éventuelle du moteur thermique (qui peut apparaître lors des régimes transitoires dans le cas de l'entraînement par ce moteur), et d'autre part pour assurer une meilleure stabilité de la régulation: en effet ladite valeur nulle de $N_R$ ne sera jamais observée dans la pratique, de sorte que la régulation sera toujours effectuée "sur une pente", c'est-à-dire dans un domaine de valeurs de $N_R$ non nulles et toujours du même sens ;

- lorsque, au cours d'une permutation du mode d'entraînement ci-dessus, la vitesse $N_E$ diminue jusqu'à sa valeur minimum, qui peut être inférieure à $N_S$ d'environ 10%, la valeur $N_R$ croît jusqu'à un maximum relativement faible, par exemple de l'ordre de 100 tours/minute.

Dans ces conditions, en régime de croisière, c'est-à-dire en dehors des périodes de permutation du mode d'entraînement de l'arbre 1, la vitesse $N_E$ étant comprise en général dans une plage de $\pm$ 2% autour de la vitesse $N_0$, compte tenu de la nature du moteur d'entraînement, la vitesse $N_R$ demeure très faible, savoir de l'ordre de quelques tours/minute.

Dans le mode de réalisation préféré de ce train 11 qui a été illustré sur les figures 1 et 2, l'équipage mobile de celui-ci comprend une cage 14 montée folle sur l'un au moins des arbres A et B, cage portant deux pignons cylindriques d'axes parallèles aux axes desdits arbres, savoir un troisième pignon 15 en prise avec le pignon 12 et un quatrième pignon 16 en prise avec le pignon 15 et avec le pignon 13, ces pignons 12 et 13 étant alors également des pignons cylindriques.

C'est cette cage 14 qui constitue l'élément régulateur du train et que l'on entraîne en rotation à la vitesse $N_R$.

Dans le mode de réalisation illustré, les pignons 12, 15 et 16 ont le même nombre de dents et le pignon 13 a un nombre de dents légèrement supérieur, ces deux nombres étant par exemple respectivement de 30 et 31, ou encore de 33 et 34, de 34 et 35, ou de 50 et 51.

On pourrait également prévoir une répartition différente entre les nombres des dents, le pignon 12 ayant par exemple un nombre de dents supérieur à celui du pignon 13 et le pignon 15, un nombre de dents inférieur à celui du pignon 16.

Pour ce qui est des moyens actionnés par l'arbre A et propres à entraîner la cage 14 à la vitesse $N_R$, on les constitue de préférence par un ensemble hydraulique 17 comprenant :

- une pompe volumétrique à débit variable 18, entraînée par l'arbre A, notamment par l'intermédiaire d'une paire de pignons 19, 20,
- un moteur hydraulique à cylindrée constante 21, propre à entraîner la cage 14, notamment par l'intermédiaire d'une paire de pignons 22, 23,
- un circuit fermé de liquide 24, propre à transmettre intégralement au moteur 21 le liquide débité par la pompe 18 et inversement,
- et un organe doseur 25, propre à régler le débit du liquide dans le circuit 24, par exemple par modification de la cylindrée de la pompe.

La position de ce doseur 25 est réglée automatiquement en permanence de manière à maintenir la vitesse de rotation $N_S$ de l'arbre B égale à la valeur de consigne $N_O$, par exemple à moins de 1% près.

On a recours à cet effet à un ensemble électronique 26 propre à élaborer des instructions de commande symbolisées par la flèche 27 en fonction à la fois de la vitesse de rotation réelle $N_S$ de l'arbre B, vitesse détectée par un organe tachymétrique 28 (information symbolisée par la flèche 29) et d'une référence de fréquence rigoureusement stabilisée, fonction de la valeur $N_O$, référence dont l'introduction dans l'ensemble 26 est symbolisée par la flèche 30.

La valeur de cette référence peut être elle-même réglée de toute manière désirable, notamment par des moyens à commande manuelle ou motorisée.

On prévoit en outre des moyens de contre-réaction symbolisés par la flèche 31 pour transmettre à l'ensemble 26 une information sur la position du doseur 25 à chaque instant.

Il est avantageux de prévoir également d'autres moyens, symbolisés par la flèche 32, pour transmettre à l'ensemble 26 une information sur la puissance électrique délivrée à chaque instant par l'alternateur 7.

En effet, si un complément de charge est branché sur le circuit électrique alimenté par cet alternateur, ou si au contraire ce circuit subit un délestage, la vitesse de rotation de l'alternateur tend à diminuer ou à augmenter : en transmettant instantanément à l'ensemble 26 une information sur la modification de puissance soutirée due à cette modification de branchement, on obtient un temps de réponse de la chaîne d'asservissement plus petit que si l'information relative à ladite modification de branchement était simplement décelée au niveau de la variation de vitesse de l'organe tachymétrique 28, c'est-à-dire au niveau de la conséquence et non à celui de la cause.

D'autres moyens encore peuvent être prévus, en fonction des besoins de l'installation, pour agir sur l'ensemble 26.

C'est ainsi que, si l'on envisage de faire fonctionner en parallèle plusieurs groupes identiques du genre de celui décrit ci-dessus, propres à entraîner respectivement des alternateurs identiques, on peut adopter pour la commande de leurs doseurs respectifs 25 un ensemble 26 commun et, dans un tel cas, prévoir dans cet ensemble un traitement d'informations relatives aux charges alimentées respectivement par les différents groupes de façon à répartir au mieux ces charges entre les groupes.

Le fonctionnement du groupe ci-dessus décrit est le suivant.

On supposera, dans ce qui suit, à titre purement illustratif que l'on désire entraîner l'alternateur 7 à une vitesse de rotation $N_O$ égale à 1.500 tours/minute à moins de 1% près, cet alternateur étant par exemple destiné à délivrer une énergie électrique alternative de fréquence F égale à 50 Hz.

En régime normal, le moteur 4 est alimenté par le réseau et son rotor tourne à une vitesse $N_E$ légèrement inférieure à $N_O$, par exemple de l'ordre de 1.460 tours/minute.

La vitesse $N_R$ de la cage 14 est alors faible et les rotations de l'arbre A sont transmises à l'arbre B par l'intermédiaire des pignons 12, 15, 16 et 13.

Quant à la vitesse $N_S$, elle est alors égale à $N_O$.

Si à partir de cette situation le réseau 5 est coupé, le disjoncteur 6 saute, et comme exposé plus haut, l'entraînement du rotor du moteur électrique 4 est progressivement pris en charge par le moteur thermique 1.

Lors de cette prise en charge, la vitesse $N_E$ commence par décroître pendant 3 à 4 secondes, jusqu'à un minimum d'environ 1.350 tours/minute (première phase), puis reprend progressivement sa valeur initiale en 15 à 20 secondes (deuxième phase).

Au cours de la première phase, la vitesse $N_S$ tend à décroître également, mais la comparaison instantanée entre cette vitesse, prélevée en 28, 29 et la vitesse de consigne $N_O$ engendre un signal d'erreur agissant immédiatement sur le doseur 25, dans un sens et avec une amplitude tels que la cage 14 est entraînée à une vitesse de régulation $N_R$ propre à compenser ladite erreur. Pendant la première phase considérée, cette vitesse $N_R$

croît jusqu'à sa valeur maximum qui est de l'ordre de 100 tours/minute.

Puis, au cours de la deuxième phase, pour laquelle la vitesse $N_E$ croît à nouveau, l'importance de la compensation nécessaire pour maintenir constante la vitesse $N_S$ diminue automatiquement, ainsi donc que la valeur $N_R$, jusqu'à ce que la vitesse $N_E$ ait atteint sa valeur de consigne stabilisée, le moteur thermique 1 ayant alors pris intégralement le relais du moteur électrique 4 pour l'entraînement du groupe.

L'alimentation de la charge Z a donc été assurée sans coupure et sans modification de fréquence pendant toute la durée de la permutation du mode d'entraînement de l'arbre A.

Le rétablissement subséquent de l'alimentation électrique du moteur 4 par le réseau 5 ne pose pas de problème particulier : dès ce rétablissement, l'embrayage 2 est ouvert et l'entraînement du rotor du moteur 4 est assuré à nouveau instantanément par voie électrique, sans aucune modification de la vitesse $N_E$ de son arbre.

Bien que les moyens hydrauliques proposés ci-dessus pour assurer l'entraînement de la cage 14 à partir de l'arbre A soient préférés, on pourrait assurer cet entrainement par des moyens différents, par exemple à l'aide d'un ensemble électrique générateur-moteur du type Ward Léonard, la pompe hydraulique 18, le moteur hydraulique 21, le circuit hydraulique 24 et le doseur 25 de la solution précédente étant alors remplacés respectivement par un générateur électrique, un moteur électrique, un circuit électrique et un rhéostat ou organe de réglage équivalent.

Il est à noter également que les ensembles originaux décrits ci-dessus, interposés entre les arbres A et B, peuvent être appliqués sans sortir du cadre de l'invention à des groupes d'entraînement et de secours constitués autrement que selon la figure 1.

Les seules conditions à remplir pour ce groupe sont :

- qu'il comprenne des moyens d'entraînement normal de l'arbre par le réseau, un volant d'inertie, un moteur thermique propre à prendre le relais des moyens ci-dessus en cas de coupure du réseau, et un embrayage ou coupleur permettant de permuter le mode d'entraînement de l'arbre A (réseau ou moteur thermique),

- et que la vitesse $N_E$ de l'arbre A ne diminue que d'une petite fraction, généralement inférieure à 15%, pendant une relativement courte durée, généralement inférieure à 30 secondes, lors des changements du mode d'entraînement de cet arbre.

C'est ainsi qu'à titre d'exemple, on a illustré sur la figure 3 une variante de réalisation pour ledit groupe.

Ce groupe comprend encore un volant 3 solidaire de l'arbre A et un moteur électrique 4, notamment du type asynchrone, normalement alimenté par le réseau 5 à travers le disjoncteur 6.

Mais ici ce moteur 4 est relié au volant par un coupleur 33 à glissement, notamment hydraulique, le moteur thermique n'étant pas prévu accouplable au rotor de ce moteur 4 par un embrayage : ce moteur thermique est ici celui d'un groupe électrogène 34 et le relais de l'alimentation électrique du moteur 4 à partir du réseau 5 est pris par une autre alimentation électrique assurée à partir dudit groupe 34 à travers un interrupteur 35 qui se ferme automatiquement lorsque le disjoncteur 6 s'ouvre et inversement (flèche 36).

Les glissements du coupleur 33 rendent possible une montée rapide du moteur asynchrone 4 jusqu'à son régime nominal lors des démarrages, avant même que le volant 3 ait atteint sa vitesse de croisière normale.

Dans cette variante, le ralentissement provisoire de l'arbre A lors d'un changement du mode d'entraînement de cet arbre est dû à la durée nécessaire pour la mise en régime du groupe électrogène 34 à partir de son arrêt, durée qui est généralement de l'ordre d'une dizaine de secondes.

Selon encore une autre variante, le moteur 4 des deux précédentes réalisations est supprimé et, en fonctionnement normal, l'alternateur 7 est entraîné par le réseau 5 et entraîne lui-même le volant d'inertie 3, par l'intermédiaire du train 11 et de l'ensemble correcteur 17, alors qu'en cas de coupure du réseau le relais de l'entraînement de l'alternateur est pris par le volant, puis par un moteur thermique alors embrayé sur ce volant.

En suite de quoi, et quel que soit le mode de réalisation adopté, on obtient finalement un groupe d'alimentation en énergie électrique équipé de moyens de secours en cas de coupure du réseau, dont la constitution et le fonctionnement résultent suffisamment de ce qui précède.

Un tel groupe présente de nombreux avantages par rapport à ceux antérieurement connus, notamment en ce qui concerne l'indépendance vis-à-vis de toute source auxiliaire de courant continu, la fiabilité, le faible prix, le faible encombrement et la possibilité d'utiliser pour l'alternateur 7 et le moteur 4 – s'il en est fait usage – des modèles classiques, non modifiés.

Comme il va de soi et comme il résulte d'ailleurs déjà de ce qui précède, l'invention ne se limite nullement à ceux de ses modes d'application et de réalisation qui ont été plus spécialement envisagés : elle en embrasse, au contraire, toutes les variantes, notamment celles où les pignons cylindriques 12 et 13 du mode de réalisation décrit ci-dessus seraient remplacés par deux pignons coniques, les pignons cylindriques 15 et 16 étant alors remplacés eux-mêmes par un seul pignon conique satellite en prise avec les deux autres, l'axe de ce dernier pignon étant incliné d'un angle voisin de 90° sur ceux des arbres A et B et étant monté fou sur une cage du type de la cage 14 ci-dessus.

REVENDICATIONS

1. Ensemble pour engendrer une énergie électrique alternative à fréquence constante et sans coupure, comportant un alternateur, des moyens d'entraînement de cet alternateur normalement alimentés par le réseau, des moyens de relais pour prendre le relais du réseau aux fins d'entraînement de l'alternateur dès coupure de ce réseau, moyens comprenant un volant d'inertie, un moteur thermique de secours et un embrayage ou coupleur, et des moyens de correction pour compenser les faibles et brèves variations de la vitesse $N_E$ du volant aux instants où l'entraînement commence à être pris en charge par les moyens de relais, ces moyens de correction comprenant d'une part un train différentiel et d'autre part un système de régulation propre à agir automatiquement sur la vitesse de rotation $N_R$ d'un élément régulateur rotatif dudit train, lors des permutations de la source d'énergie, de façon à maintenir sensiblement constante et égale à une valeur de consigne $N_O$ la vitesse $N_S$ de l'arbre de l'alternateur, caractérisé en ce que le train différentiel (11) est interposé entre l'arbre A du volant (3) et l'arbre B de l'alternateur (7), ce train comprenant un premier pignon (12) solidaire de l'arbre A, un deuxième pignon (13) solidaire de l'arbre B, et un équipage, comportant l'élément régulateur (14), propre à transmettre les rotations du premier pignon au second selon un rapport qui varie - et de préférence augmente - avec la vitesse de rotation $N_R$ dudit élément régulateur, et en ce que le système de régulation (17) est entraîné par l'arbre A.

2. Ensemble d'alimentation selon la revendication 1, caractérisé en ce que le système de régulation comprend, d'une façon connue en soi, une pompe volumétrique (18) à débit variable entraînée par l'arbre A, un moteur hydraulique (21) à cylindrée constante propre à entraîner l'élément régulateur (14), un circuit fermé de liquide (24) propre à transmettre intégralement à ce moteur le volume de liquide débité par cette pompe et inversement, et des moyens (25, 26-32) pour doser le débit de ce liquide dans ce circuit en fonction de $N_S$ et de $N_O$ de façon à maintenir $N_S$ égale à $N_O$.

3. Ensemble d'alimentation selon la revendication 1, caractérisé en ce que le système de régulation comprend une génératrice électrique entraînée par l'arbre A, un moteur électrique propre à entraîner l'élément régulateur (14), cette génératrice et ce moteur étant montés de façon à fonctionner en Ward Léonard et un circuit électrique propre à agir sur la tension de la génératrice en fonction de $N_S$ et de $N_O$ de façon à donner à la vitesse du moteur une valeur telle que soit maintenue l'égalité entre $N_S$ et $N_O$.

4. Ensemble d'alimentation selon l'une quelconque des revendications précédentes, caractérisé en ce que l'équipage est agencé de façon telle que, lorsque la vitesse de rotation $N_R$ est nulle, $N_E$ ait sa valeur maximum légèrement supérieure à $N_O$, notamment d'environ 3%, et que, lorsque $N_R$ atteint une valeur maximum relativement faible, de préférence de l'ordre d'une centaine de tours par minute, $N_E$ atteigne sa valeur minimum inférieure à $N_O$, notamment d'environ 10%.

5. Ensemble d'alimentation selon l'une quelconque des revendications précédentes, caractérisé en ce que l'équipage comprend une cage (14) montée folle sur l'arbre A et/ou l'arbre B, cage constituant l'élément régulateur ci-dessus et portant elle-même un troisième (15) et un quatrième (16) pignons engrenant l'un avec l'autre et, respectivement, le troisième avec le premier et le quatrième avec le second.

6. Ensemble d'alimentation selon la revendication 5, caractérisé en ce que les troisième et quatrième pignons portés par la cage ont tous deux le même nombre de dents que le premier pignon et que ce nombre de dents est inférieur à celui du second pignon.

7. Ensemble d'alimentation selon la revendication 6, caractérisé en ce que les nombres de dents des premier et second pignons sont respectivement de 30 et 31.

8. Ensemble d'alimentation selon l'une quelconque des revendications précédentes, caractérisé en ce que des moyens (32) sont prévus pour détecter les variations de la puissance électrique consommée par la charge (Z) alimentée par l'alternateur indépendamment de la vitesse $N_S$ et pour rendre les moyens de commande sensibles à ces variations de puissance.

9. Ensemble d'alimentation selon l'une quelconque des revendications précédentes, caractérisé en ce que les moyens d'entraînement de l'alternateur (7) sont constitués par un moteur électrique (4) dont le rotor est solidaire du volant (3) (figure 1).

10. Ensemble d'alimentation selon l'une quelconque des revendications 1 à 8, caractérisé en ce que les moyens d'entraînement de l'alternateur (7) sont constitués par un moteur électrique (4) dont le rotor est relié au volant (3) par l'intermédiaire d'un coupleur à glissement (33) (figure 2).

11. Ensemble d'alimentation selon l'une quelconque des revendications 1 à 8, caractérisé en ce que les moyens d'entraînement de l'alternateur (7) sont constitués par le réseau lui-même.

Fig.1.

Fig.2.

Fig.3.

**Office européen des brevets**

## RAPPORT DE RECHERCHE EUROPEENNE

| | DOCUMENTS CONSIDERES COMME PERTINENTS | | | CLASSEMENT DE LA DEMANDE (Int. Cl.³) |
|---|---|---|---|---|
| Catégorie | Citation du document avec indication, en cas de besoin, des parties pertinentes | | Revendication concernée | |
| | FR - E - 68 029 (COMPAGNIE POUR LA FABRICATION DES COMPTEURS ET MATERIAL D'USINES A GAZ) <br> * Page 1, colonne de gauche, ligne 1 à page 2, colonne de gauche, ligne 20; figure * <br> --- | | 1,9 | H 02 J 9/08 <br> 9/06 |
| | US - A - 3 558 901 (C.J. JACOBUS) <br> * Colonne 1, ligne 55 à colonne 3, ligne 30; figure * <br> --- | | 2,9 | |
| | GB - A - 867 839 (BLACKSTONE AND Co.) <br> * Page 1, ligne 73 à page 2, ligne 34; figure * <br> --- | | 3 | DOMAINES TECHNIQUES RECHERCHES (Int. Cl.³) <br><br> H 02 J 9/08 <br> 9/06 <br> 3/30 <br> H 02 P 9/06 |
| | US - A - 3 221 172 (K.E. ROLISON) <br> * Colonne 2, lignes 56-71; figures 1 et 4 * <br> --- | | 5 | |
| | DE - B - 1 073 087 (SIEMENS-SCHUCKERT-WERKE) <br> * Titre; colonne 2, ligne 24 à colonne 3; ligne 31; figure * <br> --- | | 8,9 | |
| | FR - A - 1 104 467 (SOCIETE GENE-RALE DE CONSTRUCTIONS ELECTRIQUES & MECANIQUES-ALSTHOM) <br> * Page 1, colonne de gauche, ligne 33 à page 2, colonne de gauche, ligne 33; figure 1 * <br> --- <br><br> ./.. | | 11 | CATEGORIE DES DOCUMENTS CITES <br><br> X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons <br><br> &: membre de la même famille, document correspondant |

| | Le présent rapport de recherche a été établi pour toutes les revendications | | |
|---|---|---|---|
| Lieu de la recherche <br> La Haye | Date d'achèvement de la recherche <br> 21.09.1981 | Examinateur <br> POINT | |

OEB Form 1503.1 06.78

## Office européen
des brevets

## RAPPORT DE RECHERCHE EUROPEENNE

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| A | <u>FR - A - 2 278 043</u> (SERAIS ENG.) <br><br> * Page 3, lignes 3-34; figure 1 * <br><br> ------- | 1 | |
| | | | **DOMAINES TECHNIQUES RECHERCHES (Int. Cl. ³)** |

OEB Form 1503.2   06.78